(19) **Europäisches Patentamt**
**European Patent Office**
**Office européen des brevets**

(11) **EP 2 517 788 B1**

(12) **EUROPEAN PATENT SPECIFICATION**

(45) Date of publication and mention
of the grant of the patent:
**22.11.2017 Bulletin 2017/47**

(51) Int Cl.:
**B01J 21/18** *(2006.01)*   **B01J 23/60** *(2006.01)*
**B01J 37/03** *(2006.01)*   **B01J 37/04** *(2006.01)*
**C07C 45/73** *(2006.01)*

(21) Application number: **11190440.5**

(22) Date of filing: **24.11.2011**

(54) **Synthesizing and utilizing novel ruthenium nanoparticle-activated charcoal-nano-zinc oxide composite catalyst**

Synthese und Verwendung von neuartigen ruthenium-nanopartikelaktivierten Holzkohle-Nanozinkoxidverbundstoffkatalysatoren

Synthèse et utilisation d'un nouveau catalyseur composite de nanoparticules de ruthénium/charbon activé/nano oxyde de zinc

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.11.2011 US 201113295193**
**27.04.2011 US 201113095417**

(43) Date of publication of application:
**31.10.2012 Bulletin 2012/44**

(73) Proprietor: **King Abdulaziz City for Science & Technology (KACST)**
**11442 Riyadh (SA)**

(72) Inventors:
• **Bagabas, Abdulaziz A.**
**11442 Riyadh (SA)**

• **Mostafa, Mohamed Mokhtar Mohamed**
**21589 Jeddah (SA)**
• **Al-Rabiah, Abdulrahman A.**
**11442 Riyadh (SA)**
• **Akhmedov, Vagif Malik**
**11442 Riyadh (SA)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**US-A1- 2011 197 653    US-B1- 7 951 976**

## Description

FIELD OF TECHNOLOGY

This disclosure generally relates to synthesizing a ruthenium nanoparticle-activated charcoal-*nano*-zinc oxide composite catalyst and using the said novel composite catalyst to increase the production of methyl isobutyl ketone (MIBK) or isopropyl alcohol (IPA).

BACKGROUND

The conversion of low-price acetone (dimethyl ketone, DMK) by self-condensation process to high-value fine chemicals such as methyl isobutyl ketone (MIBK), diisobutyl ketone (DIBK), phorone (PH), and $\alpha$-isophorone (IPH) is a challenge that is currently being faced by the industries.

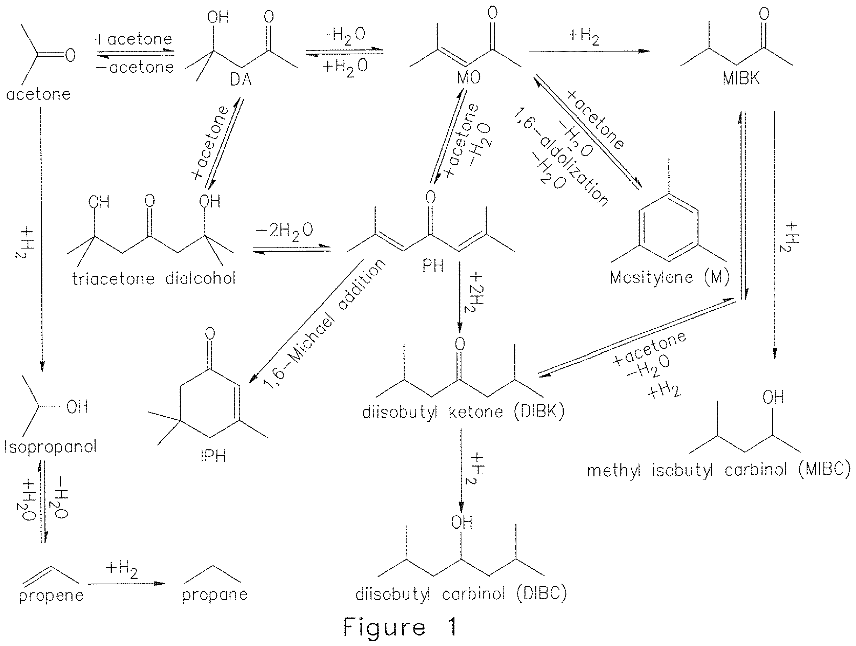

MIBK is an important product derived from acetone. Methyl isobutyl ketone (MIBK), for instance, is a product widely used as a solvent in liquid-liquid extraction, vinyl, epoxy and acrylic resin production, dyes and nitrocellulose production. MIBK is also used as an extracting agent for antibiotic production or removal of paraffins from mineral oils, in the synthesis of rubber chemicals, and in fine chemistry applications. It is used as a solvent in paint and protective coating systems. MIBK is commercially produced using a three-step process. The main reaction pathways for the synthesis of MIBK from acetone are shown in Figure 1. The first step is the aldol addition of acetone to diacetone alcohol (DA, 4-hydroxy-4-methyl-2-pentanone). The second step is the aldol condensation of DA to mesityl oxide (MO, 4-methyl-3-penten-2-one). The final step is the selective hydrogenation of the carbon-carbon olefinic bond of MO to form MIBK. The most commonly observed side reactions are over-condensation and unselective hydrogenations.

Numerous composite catalyst are currently used in gas or liquid phase production of MIBK to obtain high yield with little success. The production processes are complicated and operational costs are high. The use of homogeneous liquid base and acid composite catalyst create a corrosive environment, require an additional neutralization process for their disposal, and generate a significant wastewater stream. Furthermore, the separation of DA and MO is mandatory for carrying out its successive step. Thus, there is a need for a better composite catalyst, which may be used in gas-phase production as well as in liquid phase production of MIBK. The MIBK production should provide a higher yield and, in turn, should become cost effective.

US 7951976B1 discloses a method of making and using a catalyst, comprising: a platinum group metal; a metal oxide; and a nano-zinc oxide.

SUMMARY

The invention discloses a composite catalyst comprising a platinum group metal; an activated charcoal; and a nano-zinc oxide. Preferably, the platinum group metal is ruthenium. Most preferably, the composite catalyst is ruthenium nanoparticle-activated charcoal-nano-zinc oxide (n-Ru/AC/n-ZnO). The instant invention also discloses a process of producing MIBK and other by products via a one-step, gas-phase DMK self-condensation process.

In one embodiment, a process for making the composite catalyst of the present invention, in particular the n-Ru/AC/n-ZnO composite catalyst is disclosed. Preferably, the process of making the composite catalyst comprises: adding zinc sulfate and sodium pyruvic acid oxime monohydrate as reactants in an aqueous solution; mixing the reactants to form a precipitate; filtering the precipitate and drying the precipitate in a vacuum overnight; heating the precipitate overnight to obtain a nano-ZnO; and ratio proportioning and pulverizing thenano-ZnO with a ruthenium nanoparticle-activated charcoal to make a composite catalyst. Preferably, in the process of making the composite catalyst, the weight ratio of the ruthenium nanoparticle-activated charcoal and the precipitate to make the composite catalyst is at least one of 1:0,1:1, 1:2 and 3:2. More preferably, the process of making the composite catalyst, wherein the precipitate is zinc(II) 2-oximinopropionate dehydrate. Preferably, the process of making the composite catalyst further comprises: activating the composite catalyst under a specific temperature, a specific hydrogen flow rate and a specific time. In the process of making the composite catalyst, preferably, the specific temperature is between 662 K and 673 K, the specific hydrogen flow rate is 50-60 ml/min and/or the specific time is overnight.

In one embodiment, influence of the acidic and basic properties of (*n*-Ru/AC/*n*-ZnO) composite catalyst on the activity and selectivity for DMK self-condensation to MIBK was evaluated. In another embodiment, *n*-ZnO was mixed with *n*-Ru/AC in different weight ratios.

In one embodiment, several hydrogen flow rates, DMK flow rates, temperatures were tested to optimize the performance of (*n*-Ru/AC/*n*-ZnO) composite catalyst. The composite catalyst in one embodiment is also described as a composite or a composite catalyst.

In another embodiment, characterizations of several properties of the novel (*n*-Ru/AC/*n*-ZnO) composite catalyst were performed. These characterizations were performed to prove the purity and efficacy of the novel composite catalyst and to prove the current methods efficiency and effectiveness.

In another embodiment, surface area variations were performed to test the efficacy of the composite catalyst. In another embodiment, Ru dispersion on the surface of the composite catalyst was performed to calculate the efficacy.

In one embodiment, acid base bi-functional properties were optimized for optimal efficacy of the composite catalyst.

In another embodiment, optimization of a gas phase process of highly selective conversion of DMK to MIBK using a (n-Ru/AC/n-ZnO) composite catalyst was performed. In another embodiment, optimization of a gas phase process of highly selective conversion of DMK to various by products using a (n-Ru/AC/n-ZnO) composite catalyst was performed.

The novel composite catalyst composition, method of synthesizing the novel composite catalyst and method of using the novel composite catalyst in chemical reactions, disclosed herein, may be implemented in any means for achieving various aspects. Other features will be apparent from the accompanying figures and from the detailed description that follows.

BRIEF DESCRIPTION OF THE DRAWINGS

Example embodiments are illustrated by way of example and no limitation in the tables and in the accompanying figures, like references indicate similar elements and in which:

**Figure 1** main reaction pathways in acetone condensation process.

**Figure 2** XRD patterns of various investigated composite catalyst.

**Figure 3** TEM image of: [A] n-ZnO; [B] 5% n-Ru/AC composite catalyst.

**Figure 4** Comparison between the composite catalyst in terms of DMK conversion% and product selectivity% [T = 523 K; $H_2$ = 20 ml/min; DMK flow rate = 0.01 ml/min, time-on-stream (TOS) = 1h].

**Figure 5** Comparison between the composite catalyst in terms of DMK conversion% and product selectivity% (T = 623 K; $H_2$ = 20 ml/min; DMK flow rate = 0.015 ml/min, TOS = 1h).

**Figure 6** Effect of n-Ru/AC:n-ZnO weight ratio on the DMK conversion% and product selectivity% (T = 623 K; $H_2$ = 20 ml/min; DMK flow rate = 0.01ml/min, TOS = 1h).

**Figure 7** The dependence of acidic/basic character and Ru-dispersion% on the weight ratio of composite catalyst identity.

**Figure 8** Variation of DMK conversion% and product selectivity% with increasing the reaction temperature over 1Ru/2Zn composite catalyst ($H_2$ = 10 ml/min; DMK = 0.01 ml/min; TOS =1 hr).

**Figure 9** Variation of DMK conversion% and product selectivity% with increasing the reaction temperature over 1Ru/1Zn composite catalyst ($H_2$ = 15 ml/min; DMK = 0.015 ml/min; TOS =1 hr).

**Figure 10** Variation of DMK conversion% and product selectivity% with increasing the reaction temperature over 3Ru/2Zn composite catalyst ($H_2$ = 10 ml/min; DMK = 0.01 ml/min; TOS =1 hr).

**Figure 11** Variation of DMK conversion% and product selectivity% with increasing the reaction temperature over 1Ru/0Zn composite catalyst ($H_2$ = 20 ml/min; DMK = 0.02 ml/min; TOS =1 hr).

**Figure 12** Variation of DMK conversion% and product selectivity% with increasing the reaction temperature over 0Ru/1Zn composite catalyst ($H_2$ = 20 ml/min; DMK = 0.02 ml/min; TOS =1 hr).

**Figure 13** Variation of DMK conversion% and product selectivity% with increasing the DMK flow rate over 1Ru/2Zn composite catalyst (T = 523 K; $H_2$ = 10 ml/min; TOS =1 hr).

**Figure 14** Variation of DMK conversion% and product selectivity% with increasing the DMK flow rate over 1Ru/1Zn composite catalyst (T = 523 K; $H_2$ = 5 ml/min; TOS =1 hr).

**Figure 15** Variation of DMK conversion% and product selectivity% with increasing the DMK flow rate over 3Ru/2Zn composite catalyst (T = 573 K; $H_2$ = 10 ml/min; TOS =1 hr).

**Figure 16** Variation of DMK conversion% and product selectivity% with increasing the DMK flow rate over 1Ru/0Zn composite catalyst (T = 523 K; $H_2$ = 15 ml/min; TOS =1 hr).

**Figure 17** Variation of DMK conversion% and product selectivity% with increasing the DMK flow rate over 0Ru/1Zn composite catalyst (T = 648 K; $H_2$ = 15 ml/min; TOS =1 hr).

**Figure 18** Variation of DMK conversion% and product selectivity% with increasing the $H_2$ flow rate over 1Ru/2Zn composite catalyst (T = 573 K; DMK = 0.01 ml/min; TOS =1 hr).

**Figure 19** Variation of DMK conversion% and product selectivity% with increasing the $H_2$ flow rate over 1Ru/1Zn composite catalyst (T = 523 K; DMK = 0.01 ml/min; TOS =1 hr).

**Figure 20** Variation of DMK conversion% and product selectivity% with increasing the $H_2$ flow rate over 3Ru/2Zn composite catalyst (T = 623 K; DMK = 0.01 ml/min; TOS =1 hr).

**Figure 21** Variation of DMK conversion% and product selectivity% with increasing the $H_2$ flow rate over 1Ru/0Zn composite catalyst (T = 523 K; DMK = 0.01 ml/min; TOS =1 hr).

**Figure 22** Variation of DMK conversion% and product selectivity% with increasing the $H_2$ flow rate over 0Ru/1Zn composite catalyst (T = 648 K; DMK = 0.01 ml/min; TOS =1 hr).

Other features of the present embodiments will be apparent from the accompanying figures, tables and from the detailed description that follows.

DETAILED DESCRIPTION

Several embodiments for a method, composition and process of synthesizing novel Ruthenium-activated charcoal-nano-ZnO (n-Ru/AC/n-ZnO) composite catalyst and using the novel composite catalyst to increase the production of MIBK and other by products are disclosed. Although the present embodiments have been described with reference to specific example embodiments, it will be evident that various modifications and changes may be made to these embodiments without departing from the broader spirit and scope of the various embodiments.

**Preparation of (n-Ru/AC/n-ZnO) composite catalyst:**

Materials- Acetone (Winlab HPLC grade, +99.8%), Hydrogen gas (99.999%), sodium pyruvate (Sigma-Aldrich, ≥99%), hydroxylamine hydrochloride (Carlo Erba, 99%), sodium hydrogen carbonate (Fluka, ≥99.5%), zinc sulfate heptahydrate (BDH, 99.5%), and ruthenium 5% on activated charcoal composite catalyst (n-Ru/AC, Winlab) were commercially available and were used without further purification.

**Composition, Method of synthesizing and characterization of the composite catalyst**

Nano-ZnO (n-ZnO) was synthesized by adding an aqueous solution of sodium pyruvic acid oxime monohydrate [Na(PAO)·$H_2O$] to the aqueous solution of $ZnSO_4$·$7H_2O$. A white precipitate of Zinc(II) 2-oximinopropionate dihydrate (Zn(PAO)$_2$($H_2O$)$_2$) resulted upon mixing of the reactants. The precipitate was filtered off and then dried under vacuum overnight. Zn(PAO)$_2$($H_2O$)$_2$ was heated overnight at 662 K in a muffle furnace to obtain n-ZnO. Mixing and pulverizing this oxide with n-Ru/AC with varied weight ratios (1n-Ru/AC:0n-ZnO, 1n-Ru/AC:1n-ZnO, 1n-Ru/AC:2n-ZnO, 3n-Ru/AC:2n-ZnO, and 0n-Ru/AC:1 n-ZnO) to obtain (n-Ru/AC/n-ZnO) composite catalyst. The prepared composite catalyst was designated as 1Ru:0Zn, 1Ru:1Zn, 1Ru:2Zn, 3Ru:2Zn, and 0Ru:1Zn, respectively. The composite catalyst was activated in situ at 673 K under $H_2$ flow of 50-60 ml/min overnight prior to catalytic test.

The phase identification for the composite catalyst was performed on a Philips X' pert pro diffractometer, operated at 40 kV and 40 mA, using CuK$_\alpha$ radiation, in the 2 theta range from 2° to 100° in steps of 0.02° with a sampling time of one second/step. The crystallite size was calculated using Scherrer's equation:

$$D = B\lambda/(\beta_{1/2} \cos \theta) \qquad (1)$$

where D is the average crystallite size of the phase under investigation, B is the Scherrer's constant (0.89), $\lambda$ is the wavelength of the x-ray beam used (1.54056 Å), $\beta_{1/2}$ is the full width at half maximum (FWHM) of the analyzed diffraction peak and $\theta$ is the diffraction angle.

The BET-surface area of the prepared composite catalyst was estimated from $N_2$ physisorption at 77 K using a Quantachrome Autosorb-1-MP instrument.

The composite catalyst surface acidity and basicity were determined by temperature-programmed desorption (TPD) of pure ammonia ($NH_3$) and pure carbon dioxide ($CO_2$), respectively, using a TPD/R/O 1100 Thermo Electron instrument. For $NH_3$- or $CO_2$-TPD, a composite catalyst sample, weighing ~0.1 g, was pretreated in 10 ml/min helium (He) at 423 K for 2h before $NH_3$ or $CO_2$ adsorption at 423 K with a flow rate of 10 ml/min for 30 min. Finally, the sample was flushed with He in order to remove the excess $NH_3$ or $CO_2$ gas. Adsorption/desorption was done under constant He flow of 25 ml/min to the temperature of 773 K with a ramp of 10K/min.

The metal surface area and dispersion were determined by $H_2$ pulse chemisorption at 343 K using a Micrometrics AutoChem 2910 instrument. An amount of 0.2-0.5 g composite catalyst was dried under vacuum at 393 K for 16 hours before starting the chemisorption process. Temperature-programmed reduction (TPR) of composite catalyst was performed by heating the samples from 298 K to 423 K at a heating rate of 5 K/min in 5% vol. $H_2$/Ar at gas flow rate of 10 ml/min. The sample was hold under these conditions at 423 K for 2 h, after which it was degassed for 2 h at the latter temperature. After the TPR process, the pulse chemisorption was started at 343 K. The metal surface area and dispersion were determined from the $H_2$ consumption.

**Method of using the composite catalyst**

The DMK self-condensation was performed in a tubular glass fixed-bed micro-reactor (ID 0.9 cm), under ambient pressure of $H_2$ atmosphere. The reactor was placed in a vertical tubular furnace. A composite catalyst sample (~0.25 g) was loaded into the reactor between two layers of Pyrex glass wool and pieces of ceramics. A K-type thermocouple was placed in the center of the composite catalyst to monitor the reaction temperature. DMK was introduced to the reactor at a continuous flow, ranged between 0.01 and 0.025 ml/min, by a Hitachi HPLC pump (Model L-2100/2130), connected to a heated tube (338-343 K) for its delivery as a vapor mixed with a continuous $H_2$ flow, ranged between 5.0 and 20.0 ml/min, before entering the reaction zone at the top of the composite catalyst bed. The reaction liquid products were trapped at 233 K, were collected every one hour, and were analyzed off-line by using a Varian CP-3800 gas chromatograph, equipped with a flame ionization detector (FID) and a 50 m x 0.32 mm x 1.2 mm CP-Wax 58 CB column. The gaseous downstream flow was analyzed online by a refinery gas analyzer (RGA) Varian CP-3800 GC, equipped with an FID and a thermal conductivity detector (TCD). The products were identified by Gas Chromatography.

**Physicochemical characterization**

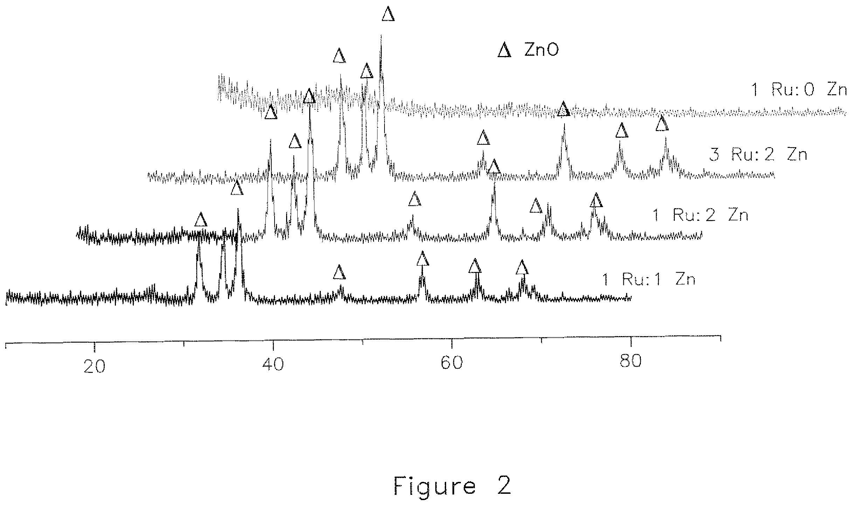

The crystalline phases as well as the crystallite size of the composite catalyst were determined form the XRD patterns, shown in Figure 2. Amorphous structure was detected for 1Ru:0Zn sample while ZnO was the main crystalline phase for the remaining investigated solids. The calculations of the corresponding crystallite size are reported in Table 1. Moreover, a Ru crystalline phase was not detected, indicating the fine dispersion of Ru metal. The composite catalyst is *nano*-sized and the crystallite size for ZnO phase ranged between 21 and 29 nm.

Table 1:

| Catalyst | XRD Phases | Crystallite Size (nm) | Ru-loading (Wt.%) | $S_{BET}$ ($m^2$/g) | $S_{Ru}$ ($m^2$/g) | Dispersion (%) |
|----------|-----------|----------------------|-------------------|---------------------|---------------------|----------------|
| 1Ru:0Zn | amorphous | --- | 5 | 327 | 22.43 | 4.61 |
| 1Ru:1Zn | zincite | 25 | 2.5 | 386 | 25.73 | 5.29 |
| 1Ru:2Zn | zincite | 29 | 1.67 | 315 | 24.36 | 5.00 |
| 3Ru:2Zn | zincite | 21 | 3 | 375 | 30.70 | 6.31 |

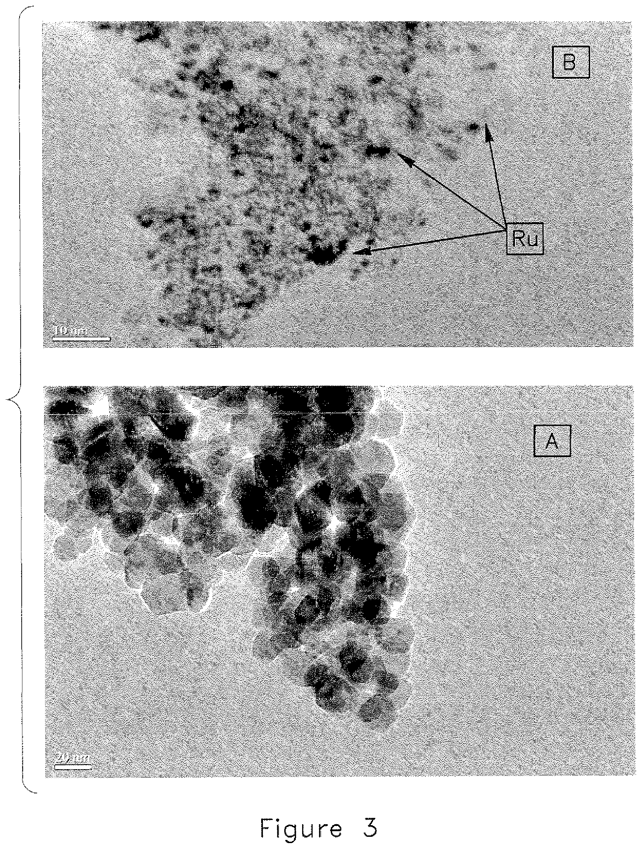

To obtain more detailed information about the structure of the (*n*-Ru/AC/*n*ZnO) composite catalyst, TEM analysis at various magnifications was performed (Figure 3). Low-magnification TEM (20 nm) shows a specific hexagonal shaped ZnO crystallites in 20-29 nm in size (Figure 3). On the other hand, high magnification TEM (10 nm) for *n*-Ru/AC samples (Figure 3) shows an amorphous structure. The black spots appear on the surface of activated charcoal represents the dispersed Ru *nanoparticle.* These pictures complement the XRD investigation.

$S_{BET}$-surface areas, derived from the nitrogen adsorption and desorption isotherms of various investigated composite catalyst samples, are given in Table 1. The $S_{BET}$ values of all the investigated composite catalyst are in the range of 315-386 $m^2$/g (for *n*-ZnO: 37.4 $m^2$/g). The textural properties of commercially available *n*-Ru/AC sample depend on the manufacturing process as well as the origin of the carbon. A heterogeneous mechanical mixing *n*-Ru/AC and *n*-ZnO effects the textural properties of the composite catalyst. Addition of *n*-ZnO to *n*-Ru/Ac leads to a change in the BET-surface area, which could be attributed to the heterogeneous mixing between *n*-Ru/AC and *n*-ZnO of different adsorption characters.

The Ru-metallic surface area ($S_{Ru}$) as well as its degree of dispersion over the mixed solid composite catalyst was determined using $H_2$ pulse chemisorption at 343 K. The results obtained are tabulated in Table 1. As shown in Table 1 the trend of both metallic surface area and the degree of dispersion of Ru metal behave similarly for all combinations of composite catalyst. The apparent maximum values of both metallic surface area and degree of dispersion were observed for the sample with 3 wt% Ru-loading (3Ru:2Zn). In one embodiment, the Ru loading in 1Ru:1Zn is only 2.5 wt.% and its degree of dispersion of about 5.29%, it is observed that the degree of dispersion of Ru on such composite catalyst was higher than that of 3Ru:2Zn composite catalyst. However, samples containing *n*-ZnO showed a higher $S_{Ru}$ and degree of dispersion compared to 1Ru:0Zn sample. The addition of *n*-ZnO to *n*-Ru/AC composite catalyst may be responsible for enhancing the degree of dispersion of ruthenium.

$CO_2$-TPD measurements were performed to obtain information on the number of active base sites in the prepared samples (Table 2). The amount of $CO_2$ adsorbed on 1Ru:0Zn and (*n*-Ru/AC/*n*ZnO) composite catalyst was found in the range of 0.04-0.27 mmol/$g_{cat}$. The basic site density for 1Ru:0Zn and the sample contains a high Ru loading (3 wt%) show the same value (0.07 x $10^{-2}$ mmol/$m^2$). A pronounced decrease was observed in the basic site density values upon decreasing the Ru (wt%) loading, i.e. increasing in *n*-ZnO content, to attain the lowest value (0.01 x$10^{-2}$

nmol/m$^2$) at 1.67 Ru wt% loading.

Table 2:

| Catalyst | CO$_2$ ads., mmol/g | NH$_3$ ads., mmol/g | Acidic/basic sites concentration after ZnO loading (%) |
|---|---|---|---|
| ZnO | 0.00 | 4.25 | ----- |
| 1Ru:0Zn | 0.21 | 0.39 | 1.86 |
| 1Ru:1Zn | 0.11 | 0.16 | 1.45 |
| 1Ru:2Zn | 0.04 | 0.28 | 7 |
| 3Ru:2Zn | 0.27 | 0.12 | 0.44 |

Estimation of the acidic sites was derived from NH$_3$-TPD measurements (Table 2). The variation in the number and distribution of the acid sites as a function of different n-ZnO content was estimated by NH$_3$-TPD. The amount of NH$_3$ adsorbed on 1Ru:0Zn and (n-Ru/AC/n-ZnO) composite catalyst were found in the range of 0.12-0.39 mmol/ g$_{cat}$. Table 2 illustrates the percentage increase in acid sites concentrations after n-ZnO loading on Ru/AC composite catalyst. The acidic/basic site ratio for 1Ru:2Zn sample recorded the highest value (7%). The pronounced increase in the acid sites density is mainly attributed to the increased amount of n- ZnO powder, of high acidic site density ∼4.25mmol/gcat.

## Catalytic Activity and Selectivity

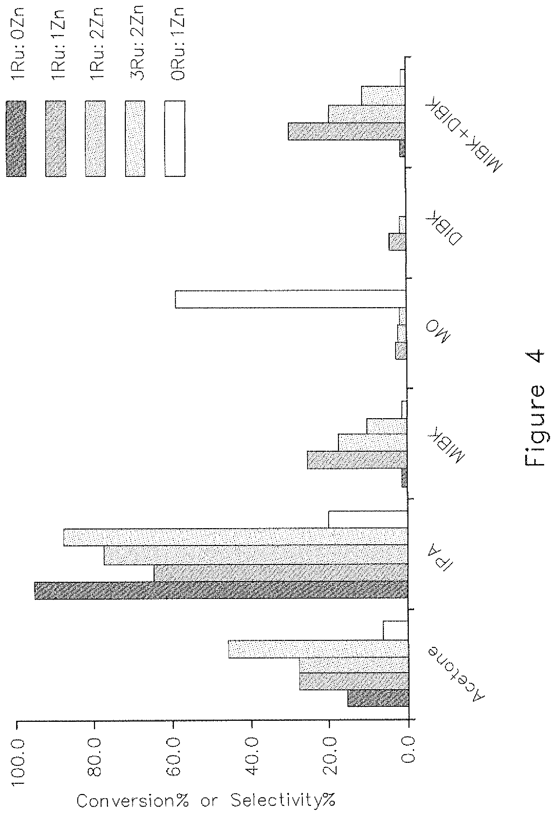

Figure 4 displays the selectivity% of MIBK as a function of the conversion% of DMK over the five (n-Ru/AC/n-ZnO) composite catalyst at 523K. Selectivity% values of the predominant by products, IPA, MO, and DIBK, were observed. In the gaseous phase, neglected amounts of propene and propane were also detected. Such observation implies that IPA undergoes a neglected dehydration process. In these experiments, the 3% Ru-loading composite catalyst (3Ru:2Zn) resulted in DMK conversion of 46%, a high selectivity towards IPA of 88%, and a low selectivity towards MIBK of 11%. This embodiment indicates that Ru-loading favors DMK-direct hydrogenation. 1Ru:0Zn composite catalyst showed the highest IPA selectivity, while 0Ru:1Zn resulted in the lowest IPA selectivity. These results compliments the results, obtained from H$_2$-chemisorption, and confirms the role of Ru to enhance the DMK-direct hydrogenation process on the expense of DMK self-condensation one. In one embodiment, the highest MIBK selectivity (∼26%) was obtained by 1Ru:1Zn composite catalyst. These results may be evidence for the role of n-ZnO on the DMK self-condensation via dehydration process due to its specific acid-base properties.

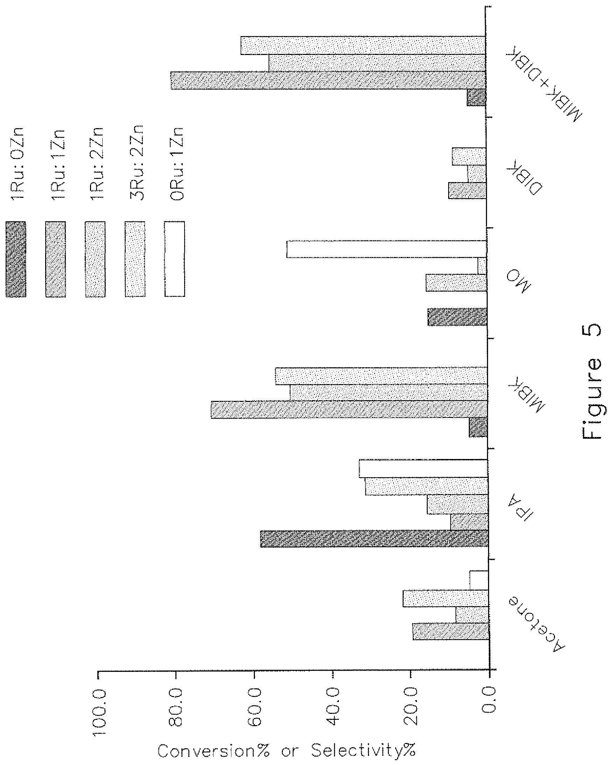

Increasing the reaction temperature up to 623K (Figure 5) resulted in a pronounced decrease in the conversion of DMK to attain 22% at the 3% Ru-loading (3Ru:2Zn) composite catalyst. However, increasing the temperature led to improve the selectivity of all the investigated composite catalyst towards the DMK self-condensation process over the DMK-direct hydrogenation. A maximum selectivity towards MIBK (∼71%) was attained by using 1Ru:1Zn composite catalyst. Moreover, this particular composite catalyst showed balanced acidic/basic properties and relatively high degree of Ru-dispersion over all the investigated composite catalyst.

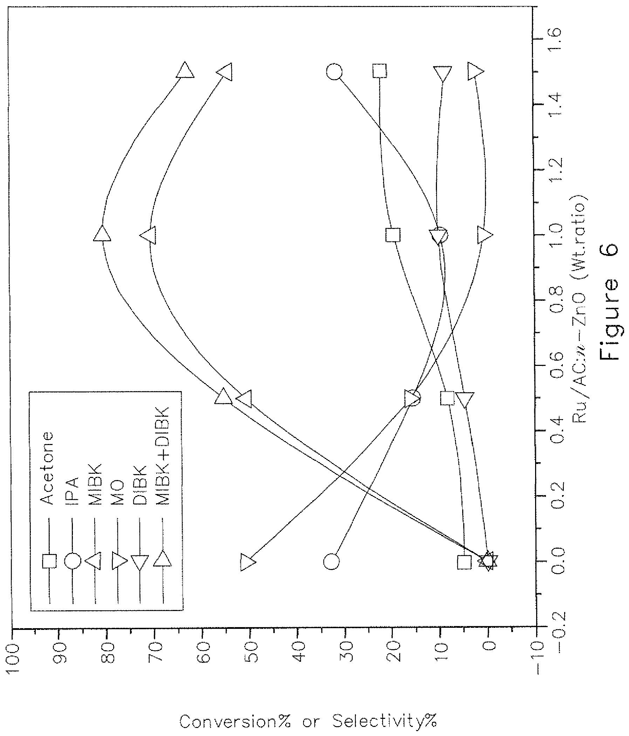

The effect of (n-Ru/AC/n-ZnO) weight ratio on the catalytic performance of the instant composite catalyst at 623 K, a relation between this ratio, DMK conversion% and product selectivity% is illustrated in Figure 6. The results indicate that the DMK conversion% increases upon increasing the Ru-content. The selectivity% towards MIBK follows a volcano-type curve with a maximum at 1n-Ru/AC:1n-ZnO.

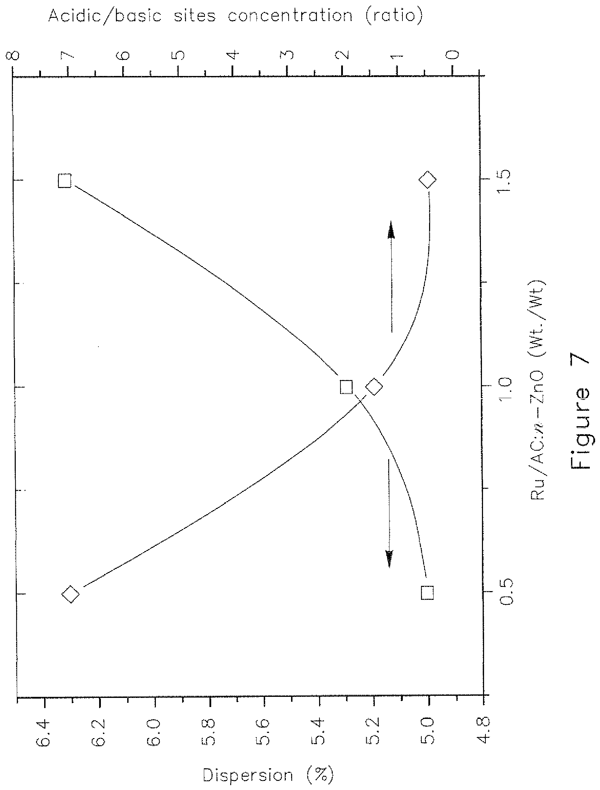

Figure 7 illustrates the results of the dependence of acidic/basic site concentration and Ru-dispersion % on the (n-Ru/AC/n-ZnO) weight ratio. The results, as shown in Figure 7, indicate that the Ru-dispersion % increases monotonically while the acidic/basic sites concentration ratio decreases exponentially upon decreasing the n-ZnO content. These observations are in agreement with the observed dependence of the catalytic selectivity% towards MIBK at 623 K on the composite catalyst identity in the following order: 1Ru:1Zn> 3Ru/2Zn> 1Ru/2Zn> 1Ru/0Zn > 0Ru/Zn. This trend in MIBK selectivity% could be related to the effect of the surface acidic/basic nature and to the dispersion power of n-ZnO on the performance of the composite catalyst.

## Condition for composite catalyst performance

The influence of temperature, DMK flow rate, and H$_2$ flow rate on the catalytic activity of the composite catalyst was done by varying various parameters. The effect of temperature was explored by studying the reaction at 523, 573, 623, or 648 K. The effect of acetone flow rate was investigated at 0.01,0.015, 0.02, or 0.025 ml/min while the H$_2$ flow rate was studied at 5.0, 10.0, 15.0, or 20.0 ml/min. Some representative examples, demonstrating the effect of each factor on the DMK conversion% and the selectivity% towards the main products at the first-hour time-on-stream (TOS), are given below.

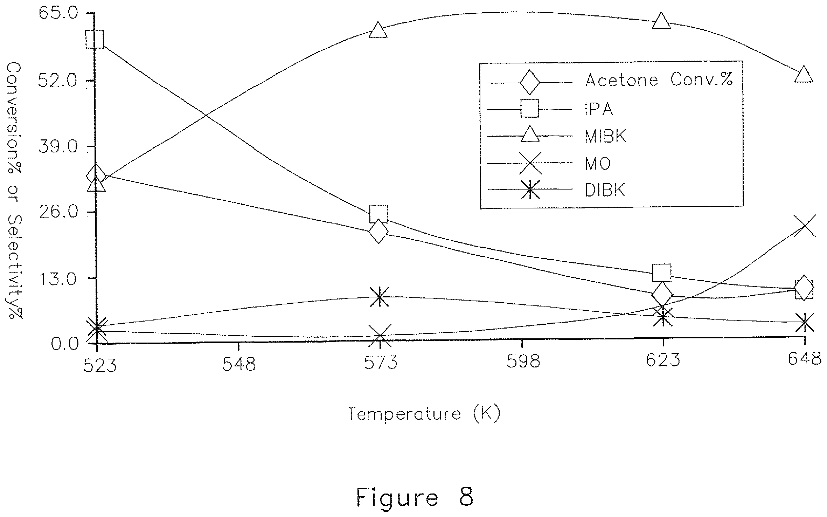

Figures 8-12 display how temperature affects the catalytic behavior. Figure 8 shows that DMK conversion% and selectivity towards IPA decrease upon increasing the temperature over the 1Ru/2Zn composite catalyst, at $H_2$ flow rate of 10 ml/min and DMK flow rate of 0.01 ml/min. On the other hand, the selectivity towards MIBK and towards DIBK increases with raising the temperature to 573 K, after which it decreases with increasing temperature. This decrease in MIBK and DIBK selectivity is accompanied with increase in MO selectivity. These trends in DMK conversion% and product selectivity% are evidence of the reduction of the composite catalyst activity with increasing temperature. However, 573 K may be regarded as the best temperature for the production of MIBK from DMK-self condensation process while 523 K is the best temperature for the production of IPA from the DMK-direct hydrogenation process by using the 1Ru/2Zn composite catalyst under the aforementioned operating conditions.

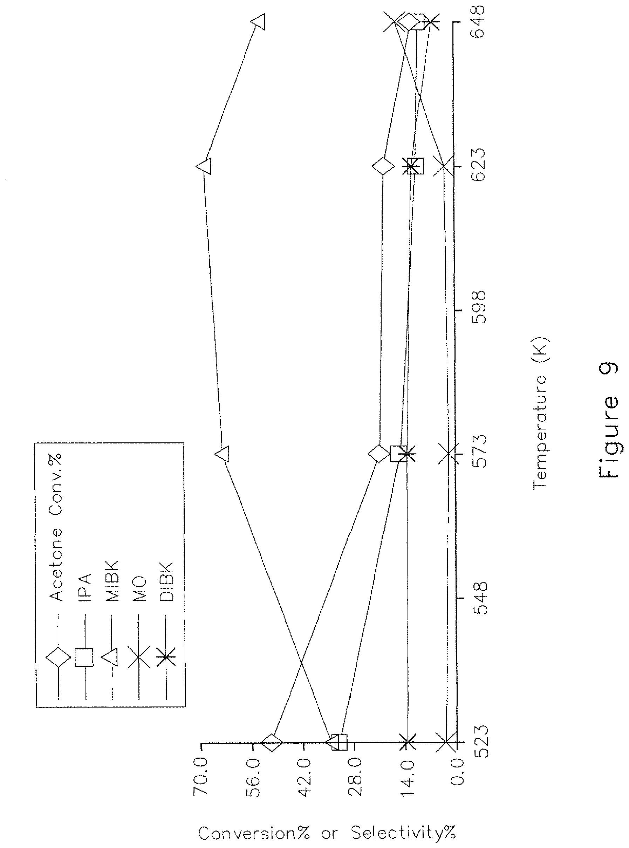

Figure 9 exhibits the performance of the 1Ru/1Zn composite catalyst at $H_2$ flow rate of 15 ml/min and DMK flow rate of 0.015 ml/min. The DMK conversion% and IPA selectivity% decrease upon increasing the temperature while the MIBK selectivity% increases with increasing the temperature up to 623 K and decreases with increasing temperature at 648 K. The selectivity% towards DIBK and towards MO is almost stable with increasing temperature from 523 to 623 K. The selectivity% of DIBK decreases while the MO selectivity% increases with increasing temperature to 648 K. According to these observations, 648 K may be an undesirable temperature with regards to catalytic activity. 623 K may be optimal temperature for obtaining MIBK from the DMK-self condensation process among the tested embodiments, but not limited to the same. 523 K, with its highest DMK conversion%, may be considered as an optional temperature between DMK-self condensation and DMK-direct hydrogenation because both MIBK and IPA are produced with almost same selectivity.

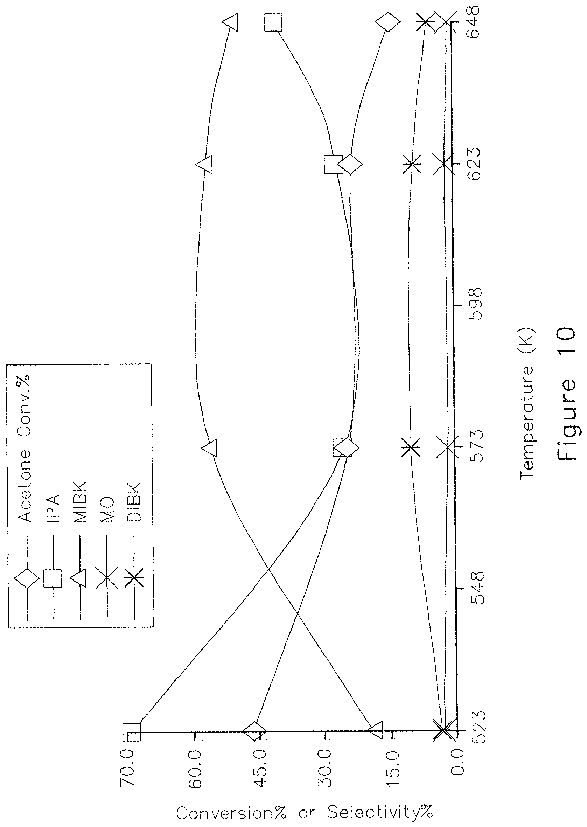

Figure 10 shows the catalytic performance of the 3Ru/2Zn composite catalyst at $H_2$ flow rate of 10 ml/min and DMK flow rate of 0.01 ml/min. The DMK conversion% decreases with increasing temperature from 523 to 573 K, then becomes stable upon increasing temperature to 623 K, and finally decreases by increasing temperature to 648 K. The selectivity% towards IPA, however, decrease by increasing temperature from 523 to 573 K and then increases by increasing temperature to 623 K and 648 K. The selectivity% towards MIBK, varies with regards to the selectivity% towards IPA, increases with increasing the temperature from 523 to 573 and then decreases with increasing the temperature to 623 to 648 K. The selectivity% towards DIBK has a similar trend to that one observed for MIBK. The selectivity% towards MO is very low and decreases slightly with increasing temperature to 573 K and then stabilizes with increasing temperature. These trends in DMK conversion% and product selectivity% indicate that 573 K is the best temperature for DMK-self condensation towards MIBK and 523 K is the best temperature for DMK-direct hydrogenation towards IPA.

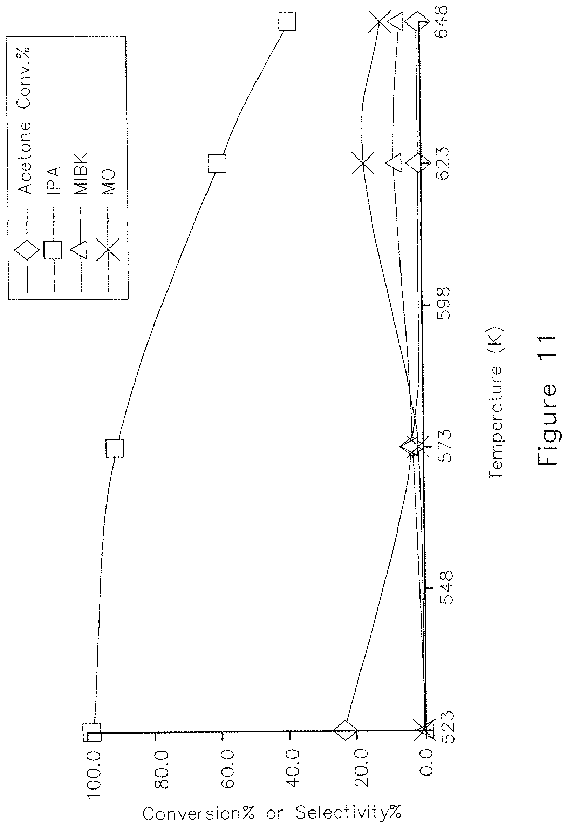

Figure 11 shows the catalytic performance of the 1Ru/0Zn at $H_2$ flow rate of 20 ml/min and DMK flow rate of 0.02 ml/min. The DMK conversion% decreases dramatically to almost zero with increasing temperature. Catalytic behavior of using *n*-Ru/AC by itself as a catalyst appears to be ineffective. Furthermore, 1Ru/0Zn composite catalyst gives high selectivity% towards IPA because of the Ru metal potential for adsorbing hydrogen while very low selectivity% towards MO, MIBK and DIBK was observed due to the lack of the acidic-basic sites, required for the DMK-self condensation process. The selectivity towards IPA decreases enormously with increasing temperature because of the exothermic nature of the hydrogenation process of DMK to IPA ($\Delta H$ = -54.4 kJ/mol (Wiberg et al., 1991), resulting in thermodynamic disfavoring of DMK-direct hydrogenation process.

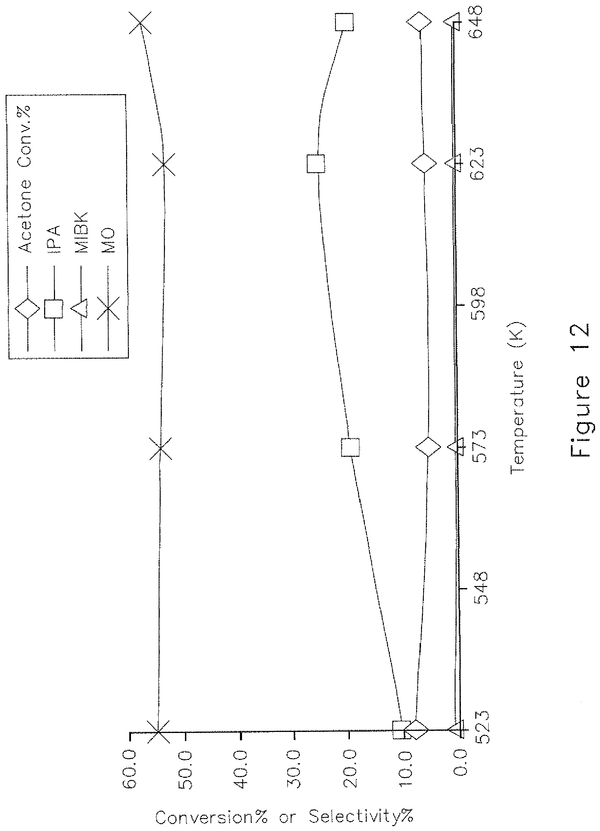

Figure 12 shows the catalytic behavior over the 0Ru/1Zn composite catalyst at $H_2$ flow rate of 10 ml/min and DMK flow rate of 0.01 ml/min. The DMK conversion% is low, reflecting the poor catalytic activity of *n*-ZnO by itself as a composite catalyst, and is almost stable with increasing temperature. The highest selectivity towards MO is shown because *n*-ZnO possesses acidic-basic sites. On the other hand, the low selectivity% towards IPA reflects the ability of *n*-ZnO for the DMK-direct hydrogenation. The hydrogenation ability of *n*-ZnO might be ascribed to its reduction to zinc metal (Taylor et al., 1927, Burwell et al. 1936, Woodman et al. 1940, Taylor et al. 1946). The very poor selectivity% towards MIBK may denote to the very poor hydrogenation ability of Zn metal in *n*-ZnO to hydrogenate the C=C, which is conjugated with the carbonyl group of MO.

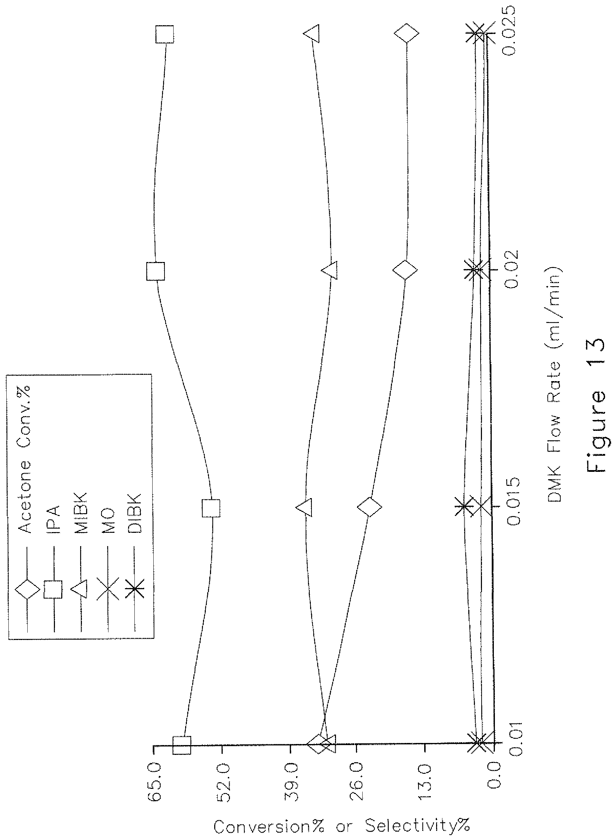

Figures 13-17 display the effect of DMK flow rate on the catalytic performance. Figure 13 shows that the DMK conversion% decreases with increasing the DMK flow rate from 0.01 to 0.025 ml/min over the 1Ru/2Zn composite catalyst at 523 K and $H_2$ flow rate of 10 ml/min. On the other hand, the selectivity% towards IPA, MIBK, DIBK, and MO remains almost constant for each of them upon increasing the DMK flow rate. Such observations may indicate that the composite catalyst surface is saturated with the reacting DMK molecules upon increasing their flow rate. In addition, the favoring high selectivity% towards IPA, irrespective of the DMK flow rate, this may also indicate that there is a preference of the DMK-direct hydrogenation over the DMK-self condensation by this composite catalyst under the aforementioned conditions.

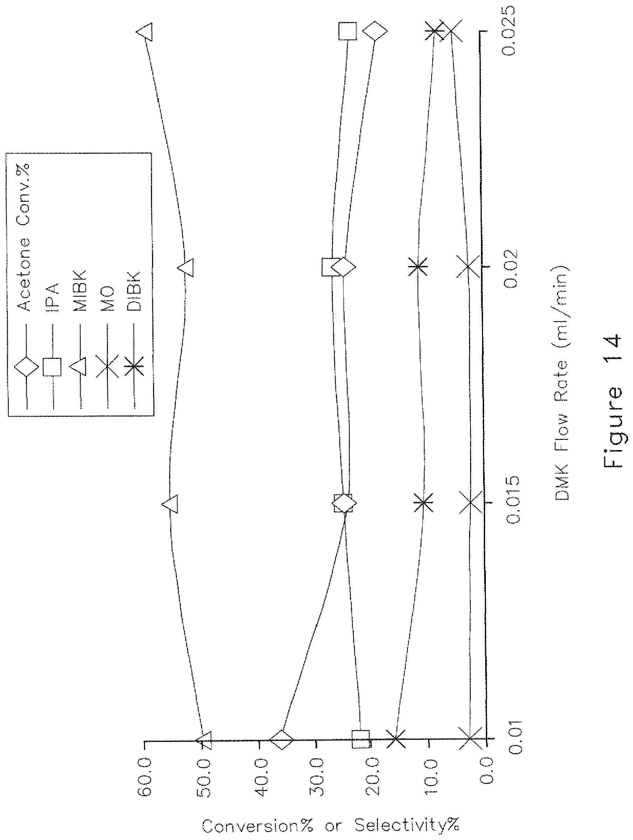

Figure 14 exhibits the effect of increasing the DMK flow rate on its conversion% and on the product selectivity% over the 1Ru/1Zn composite catalyst at 523 K and $H_2$ flow rate of 5 ml/min. The DMK conversion% decreases with increasing the flow from 0.01 to 0.025 ml/min while the product selectivity% towards IPA, MIBK, DIBK, and MO remains almost stable for each of them upon increasing the DMK flow rate. These observations may point out that the saturation of the composite catalyst surface plays a role while reacting with DMK molecules when the flow rate is increased. The DMK self condensation appears to be favored over the DMK-direct hydrogenation under the experimental conditions by the composite catalyst by increasing the selectivity% towards MIBK regardless of DMK flow.

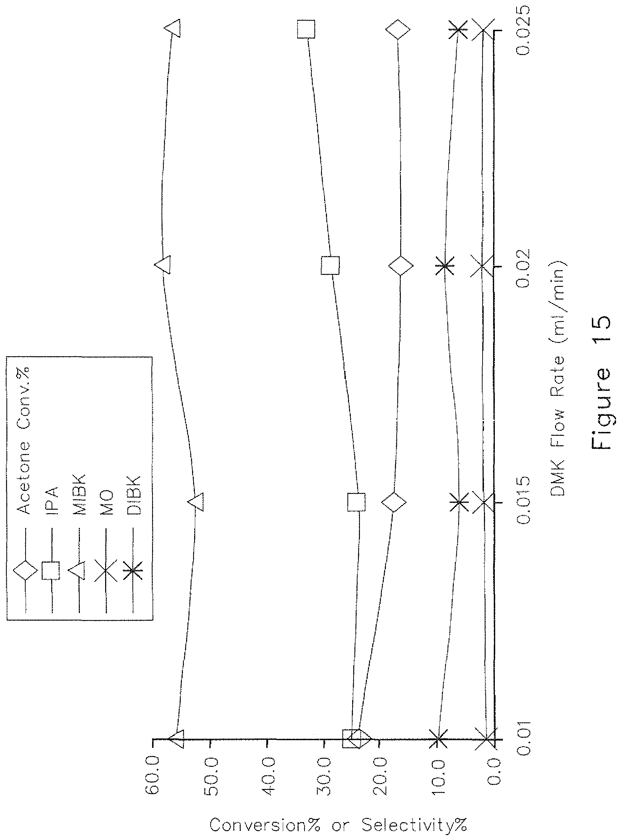

Figure 15 represents the catalytic performance of the 3Ru/2Zn composite catalyst at 573 K and $H_2$ flow rate of 10 ml/min when the DMK flow rate is increased. The DMK conversion% decreases as a results of increasing its flow rate from 0.01 to 0.015 and then stabilizes with increasing the flow rate. The selectivity% towards IPA increases with increasing the DMK flow rate while the selectivity% towards MIBK, DIBK, and MO remains constant for each of them. The highest selectivity, however, is noticed towards MIBK. These results may indicate that the DMK-self condensation is favored over the DMK-direct hydrogenation when using this composite catalyst under the above mentioned reaction conditions.

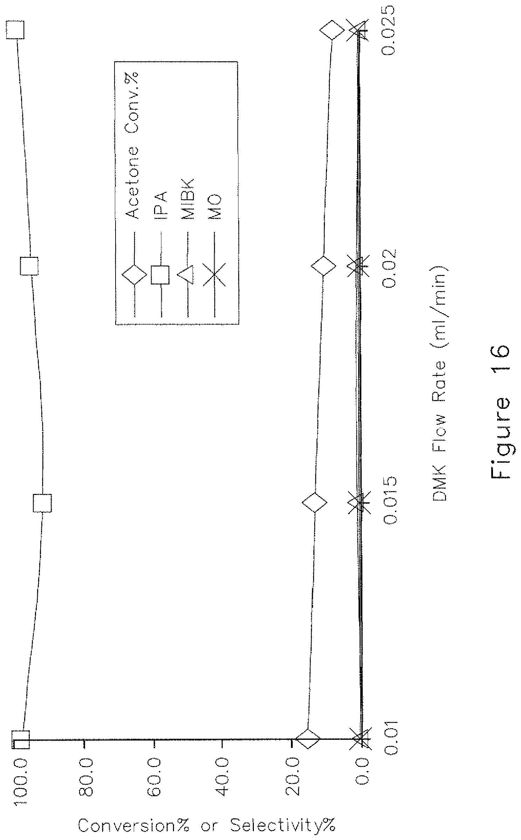

Figure 16 shows low DMK conversion%, which decreases with increasing its flow rate from 0.01 to 0.025 ml/min over the 1Ru/0Zn composite catalyst at 523 K and $H_2$ flow rate of 15 ml/min. The selectivity% towards IPA is almost 100% over the whole range of the DMK flow rate investigated whereas the selectivity% towards other products (MIBK, DIBK, and MO) is negligible. These results may be indicative of the ruthenium power in adsorbing hydrogen, carrying out the hydrogenation reaction, and lacking the required acidic-basic sites for the DMK-self condensation. In addition, these results illustrate the poor catalytic activity of a single-component catalyst and prove the need of multifunctional-property of a composite catalyst, possessing the acidic-basic and hydrogenation sites.

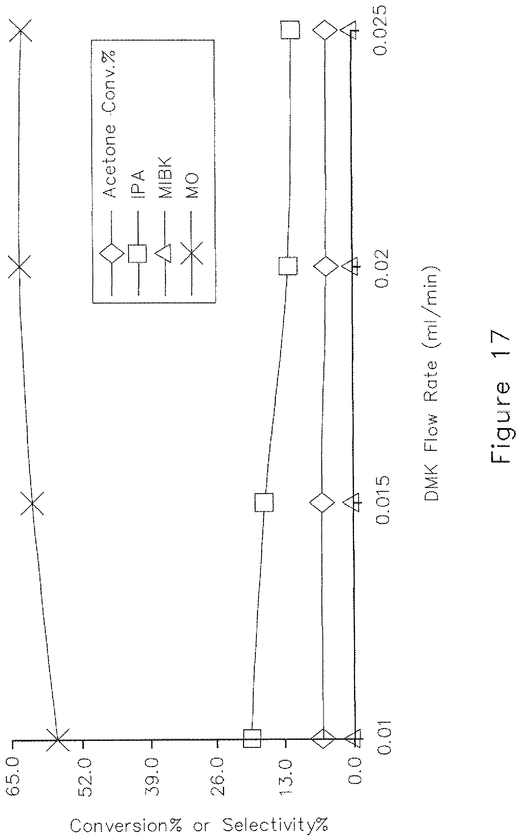

Figure 17 displays the low catalytic activity of the 0Ru/1Zn composite catalyst, as it is demonstrated by the low DMK conversion%, at 648 K and $H_2$ flow rate of 10 ml/min. The DMK conversion% is almost stable with the increase in its flow rate. The selectivity%, however, towards IPA is low and decreases with increasing the flow rate while the selectivity% towards MO increases. There is negligible selectivity% towards MIBK under these reaction conditions. These results may show the poor activity of a single-component catalyst and the preference of DMK-self condensation over the DMK-direct hydrogenation by using n-ZnO catalyst. The low selectivity% towards IPA might be attributed to the reduction of n-ZnO to zinc metal, working as a hydrogenation sites (Taylor et al., 1927, Burwell et al. 1936, Woodman et al. 1940, Taylor et al. 1946). The highest selectivity towards MO may be due to n-ZnO acidity-basicity surface character. The neglected selectivity% towards MIBK may be taken as an evidence for the very poor hydrogenation ability of Zn metal in n-ZnO to hydrogenate the conjugated C=C with the carbonyl group in MO.

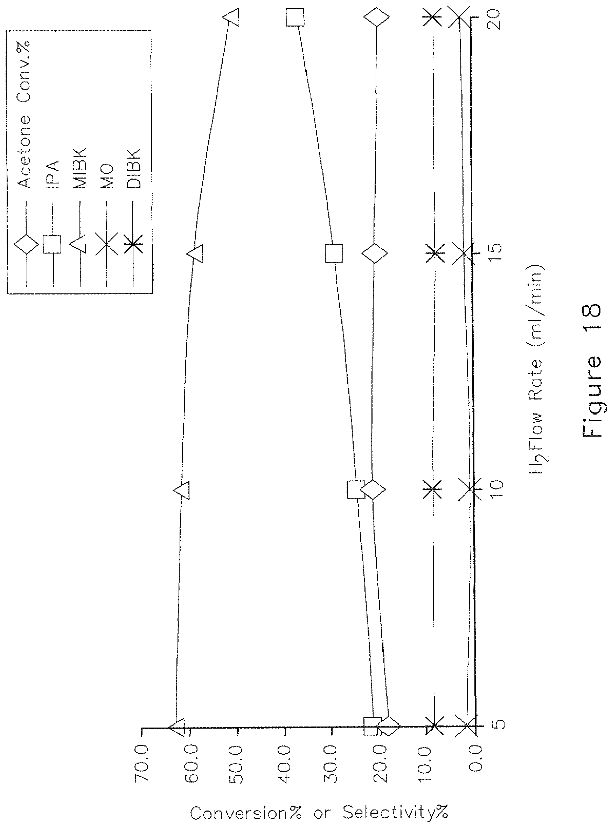

Figures 18-22 represent examples for the effect of $H_2$ flow rate on the catalytic performance. Figure 18 shows that the DMK conversion% and the selectivity% towards DIBK and towards MO are almost constant with increasing the $H_2$ flow rate from 5 to 20 ml/min over the 1Ru/2Zn composite catalyst at 573 K and DMK flow rate of 0.01 ml/min. However, the selectivity% towards IPA increases while the selectivity% towards MIBK decreases with increasing the $H_2$ flow rate. These observations generally display the preference of the DMK-self condensation over the DMK-direct hydrogenation by using this composite catalyst under these circumstances. However, the decrease in MIBK selectivity% and increase in IPA selectivity% along with increasing the $H_2$ flow rate may denote that the increase in $H_2$ flow rate facilitate the DMK-direct hydrogenation more than the DMK-self condensation.

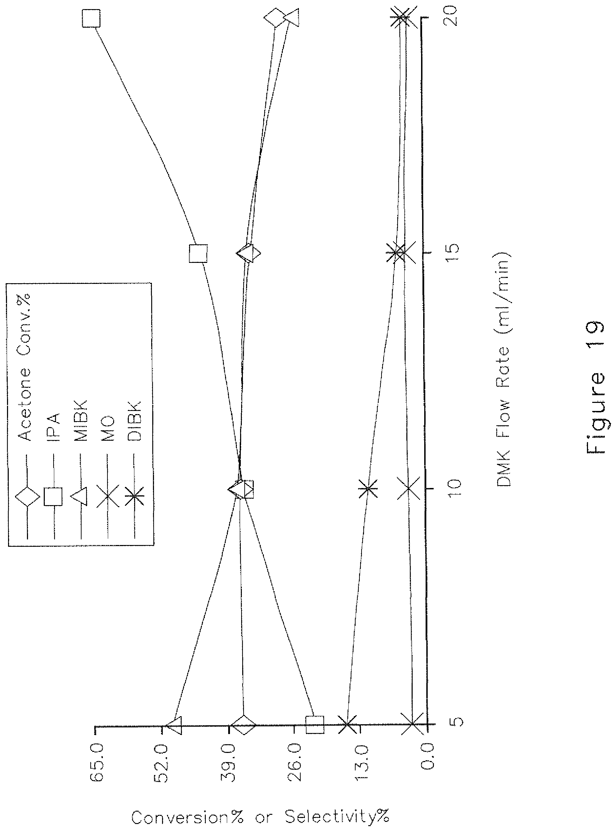

Figure 19 shows that the DMK conversion% decreases with increasing the $H_2$ flow rate from 5 to 20 ml/min over 1Ru/1Zn composite catalyst at 523 K and DMK flow rate of 0.01 ml/min. The selectivity% towards IPA, however, increases while the selectivity% towards MIBK and towards DIBK decreases upon increasing the $H_2$ flow rate. The selectivity% towards MO is almost constant over the studied range of $H_2$ flow rate. These results may suggest that the DMK-direct hydrogenation is preferred over the DMK-self condensation by using this composite catalyst under these operating conditions. The decrease in DMK conversion% upon the increase in the flow might be ascribed to the reduction in contact time, i.e. reduction in the residence of DMK molecules over the surface of the composite catalyst. At $H_2$ flow rate of 10 ml/min the DMK conversion% and the selectivity% towards IPA and towards MIBK are equal, which may indicate that the composite catalyst direct both the DMK-direct hydrogenation and DMK-self condensation without any preference.

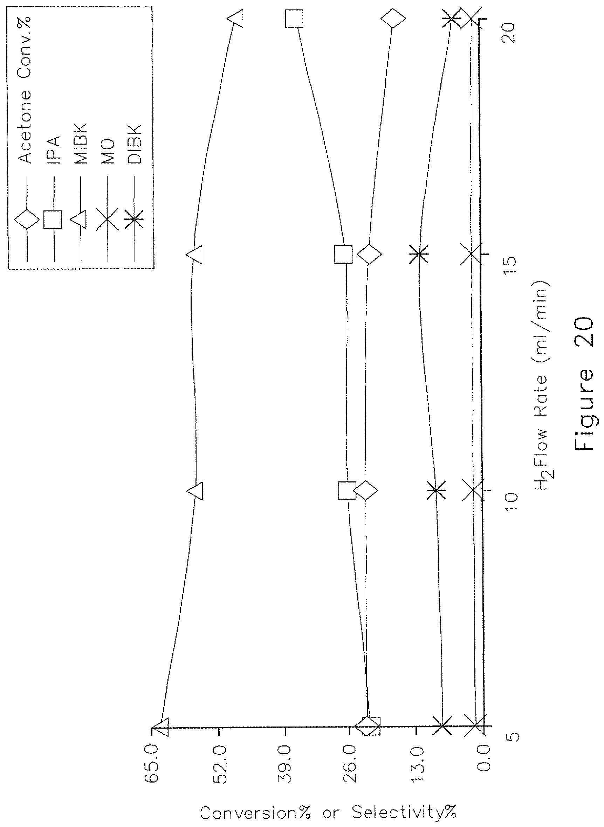

Figure 20 displays that the DMK conversion% is almost stable when increasing the $H_2$ flow rate from 5 to 15 ml/min and then decrease upon increasing the flow to 20 ml/min over 3Ru/2Zn composite catalyst at 623 K and DMK flow rate of 0.01 ml/min. On the other hand, the selectivity% towards IPA increases while the selectivity% towards MIBK decreases with increasing the $H_2$ flow rate. The selectivity% towards DIBK and towards MO is almost stable with increasing the flow. These results show the preference of the DMK-self condensation over the DMK-direct hydrogenation over this composite catalyst under these reaction conditions. However, the decrease in MIBK selectivity% and increase in IPA selectivity% may indicate that the DMK-direct hydrogenation preference increases with increasing the $H_2$ flow rate.

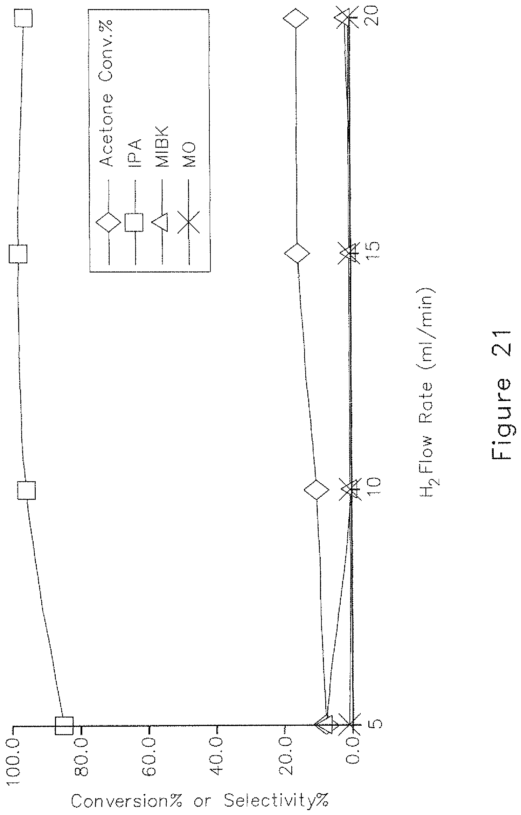

Figure 21 shows that both of DMK conversion% and selectivity% towards IPA increases with increasing the $H_2$ flow rate while the selectivity% towards MIBK decreases upon increasing the flow from 5 to 10 ml/min and then stabilizes over 1Ru/0Zn composite catalyst at 523 K and DMK flow rate of 0.01 ml/min. The selectivity% towards MO is negligible and stable along with the increase in flow. These results are consistent with the fact that the n-Ru/AC as a single-component composite catalyst has the power of hydrogenation, required for the DMK-direct hydrogenation, through its ruthenium metal and lacks the acidic-basic site, required for the DMK-self condensation. The low DMK conversion% displays the poor activity of the single-component composite catalyst.

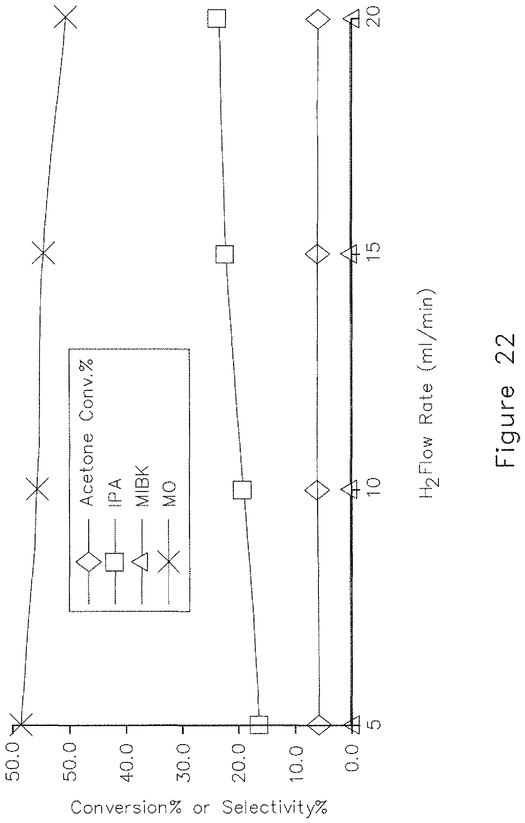

Figure 22 shows a low, stable DMK conversion% with increasing the $H_2$ flow rate over 0Ru/1Zn composite catalyst at 648 K and DMK flow rate of 0.01 ml/min. The selectivity% towards IPA increases whereas the selectivity% towards MO decreases with increasing the flow. The selectivity% towards MIBK is negligible, stable along with the increase in flow. These results are consistent with the poor hydrogenation power of $n$-ZnO catalyst due to the presence of zinc metal (Taylor et al., 1927, Burwell et al. 1936, Woodman et al. 1940, Taylor et al. 1946) and its preference for the DMK-self condensation over the DMK-direct hydrogenation. However, increases the $H_2$ flow increase the ability of the ZnO for the DMK-direct hydrogenation process, as it is evidence from increase in IPA selectivity% and decrease in MO selectivity%.

In addition, the specification and drawings are to be regarded in an illustrative rather than as in a restrictive sense.

**Claims**

1. A composite catalyst, comprising:

   a platinum group metal;
   an activated charcoal; and
   a nano-zinc oxide.

2. The composite catalyst as in claim 1, wherein the platinum group metal is ruthenium.

3. The composite catalyst as in claim 2, wherein the composite catalyst is ruthenium nanoparticle-activated charcoal-nano-zinc oxide.

4. A process of making the composite catalyst of claim 3, comprising:

   adding .zinc sulfate and sodium pyruvic acid oxime monohydrate as reactants in an aqueous solution;
   mixing the reactants to form a precipitate;
   filtering the precipitate and drying the precipitate in a vacuum overnight;
   heating the precipitate overnight to obtain a nano-ZnO; and
   ratio proportioning and pulverizing the nano-ZnO with a ruthenium nanoparticle-activated charcoal to make a composite catalyst.

5. The process of making the composite catalyst as in claim 4, wherein the weight ratio of the ruthenium nanoparticle-activated charcoal and the precipitate to make the composite catalyst is at least one of 1:0, 1:1, 1:2 and 3:2.

6. The process of making the composite catalyst as in claim 4, wherein the precipitate is zinc(II) 2-oximinopropionate dehydrate.

7. The process of making the composite catalyst as in claim 4, further comprising: activating the composite catalyst under a specific temperature, a specific hydrogen flow rate and a specific time.

8. The process of making the composite catalyst as in claim 7, wherein the specific temperature is between 662 K and 673 K.

9. The process of making the composite catalyst as in claim 7, wherein the specific hydrogen flow rate of 50-60 ml/min.

10. The process of making the composite catalyst as in claim 7, wherein the specific time is overnight.

11. A method of using the composite as in claims 1-3 for one-step gas-phase acetone condensation.

12. A method using the composite catalyst as in claims 1-3, comprising:

    loading the composite catalyst in a reactor between two layers of pyrex glass wool and pieces of ceramic;
    placing a thermocouple in the center of the composite catalyst to monitor a reaction temperature;
    vaporizing the acetone using a heated tube and a pump at a specific rate and a specific temperature;

introducing the vaporized acetone as a continuous flow at a specific flow rate to mix with a hydrogen gas at a continuous flow rate; and

reacting the vaporized acetone mixed with hydrogen gas with the composite catalyst to produce methyl isobutyl ketone and isopropyl alcohol.

13. The method of using the composite catalyst as in claim 12, further comprising:

collecting a liquid product that was formed and analyzing the liquid product every hour using a gas chromatography equipment; and

analyzing a gas product using a gas analyzer to identify and quantify the gas product.

14. The method of using the composite catalyst as in claim 13, wherein the liquid product is at least one of methyl isobutyl ketone, diisobutyl ketone mesityl oxide, mesitylene and isopropyl alcohol.

15. The method of using the composite catalyst as in claim 12, wherein the reaction temperature is in the range of 523 K-648 K, the acetone flow rate is at least one of a 0,01, 0.015, 0.02 and 0.025 ml/min, and/or the hydrogen flow rate is at least one of 5.0, 10.0, 15.0, and 20.0 ml/min.

**Patentansprüche**

1. Verbundkatalysator, umfassend:

ein Metall der Platingruppe;
eine aktivierte Holzkohle; und
ein Nano-Zinkoxid.

2. Verbundkatalysator nach Anspruch 1, wobei das Metall der Platingruppe Ruthenium ist.

3. Verbundkatalysator nach Anspruch 2, wobei der Verbundkatalysator Rutheniumnanoteilchen-aktivierte Holzkohle-Nano-Zinkoxid ist.

4. Verfahren zum Herstellen des Verbundkatalysators nach Anspruch 3, umfassend:

Zufügen von Zinksulfat und Natriumbrenztraubensäureoximmonohydrat als Reaktanten in einer wässrigen Lösung;
Mischen der Reaktanten, um einen Niederschlag zu bilden;
Filtrieren des Niederschlags und Trocknen des Niederschlags in einem Vakuum über Nacht;
Erwärmen des Niederschlags über Nacht, um ein Nano-ZnO zu erhalten; und
Anteilsportionieren und Pulverisieren des Nano-ZnO mit einer Rutheniumnanoteilchen-aktivierten Holzkohle, um einen Verbundkatalysator herzustellen.

5. Verfahren zum Herstellen des Verbundkatalysators nach Anspruch 4, wobei das Gewichtsverhältnis der Rutheniumnanoteilchen-aktivierten Holzkohle und des Niederschlags, um den Verbundkatalysator herzustellen, wenigstens eines von 1:0, 1:1, 1:2 und 3:2 ist.

6. Verfahren zum Herstellen des Verbundkatalysators nach Anspruch 4, wobei der Niederschlag Zink(II)-2-oximinopmpionatdehydrat ist.

7. Verfahren zum Herstellen des Verbundkatalysators nach Anspruch 4, weiter umfassend: Aktivieren des Verbundkatalysators unter einer spezifischen Temperatur, einer spezifischen Wasserstoffflussgeschwindigkeit und einer spezifischen Zeit.

8. Verfahren zum Herstellen des Verbundkatalysators nach Anspruch 7, wobei die spezifische Temperatur zwischen 662 K und 673 K ist.

9. Verfahren zum Herstellen des Verbundkatalysators nach Anspruch 7, wobei die spezifische Wasserstoffflussgeschwindigkeit 50-60 ml/min ist.

**10.** Verfahren zum Herstellen des Verbundkatalysators nach Anspruch 7, wobei die spezifische Zeit über Nacht ist.

**11.** Verfahren unter Verwendung des Verbunds nach Anspruch 1 - 3 für eine einstufige Gasphasenacetonkondensation.

**12.** Verfahren unter Verwendung des Verbundkatalysators wie in Ansprüchen 1 - 3, umfassend:

Beladen des Verbundkatalysators in einen Reaktor zwischen zwei Schichten aus Pyrexglaswolle und Stücken aus Keramik;
Anordnen eines Thermoelements in der Mitte des Verbundkatalysators, um eine Reaktionstemperatur zu überwachen;
Verdampfen des Acetons unter Verwendung einer erwärmten Röhre und einer Pumpe bei einer spezifischen Geschwindigkeit und einer spezifischen Temperatur;
Einführen des verdampften Acetons als ein kontinuierlicher Fluss bei einer spezifischen Flussgeschwindigkeit, um mit einem Wasserstoffgas bei einer kontinuierlichen Flussgeschwindigkeit zu mischen; und
Umsetzen des verdampften Acetons, gemischt mit Wasserstoffgas, mit dem Verbundkatalysator, um Methylisobutylketon und Isopropylalkohol herzustellen.

**13.** Verfahren zur Verwendung des Verbundkatalysators wie in Anspruch 12, weiter umfassend:

Sammeln eines flüssigen Produkts, das gebildet wurde, und Analysieren des flüssigen Produkts jede Stunde unter Verwendung einer Gaschromatographieausrüstung; und
Analysieren eines Gasprodukts unter Verwendung eines Gasanalysators, um das Gasprodukt zu identifizieren und zu quantifizieren.

**14.** Verfahren zur Verwendung des Verbundkatalysators wie in Anspruch 13, wobei das flüssige Produkt wenigstens eines von Methylisobutylketon, Diisobutylketonmesityloxid, Mesitylen und Isopropylalkohol ist.

**15.** Verfahren zur Verwendung des Verbundkatalysators nach Anspruch 12, wobei die Reaktionstemperatur im Bereich von 523 K-648 K ist, die Acetonflussgeschwindigkeit wenigstens eine von 0,01, 0,015, 0,02 und 0,025 ml/min ist, und/oder die Wasserstoffflussgeschwindigkeit wenigstens eine von 5,0, 10,0, 15,0 und 20,0 ml/min ist.

**Revendications**

**1.** Catalyseur composite, comprenant :

un métal du groupe platine ;
un charbon activé ; et
un nano oxyde de zinc.

**2.** Catalyseur composite selon la revendication 1, dans lequel le métal du groupe platine est le ruthénium.

**3.** Catalyseur composite selon la revendication 2, dans lequel le catalyseur composite est composé de nanoparticules de ruthénium/charbon activé/nano oxyde de zinc.

**4.** Procédé de fabrication du catalyseur composite selon la revendication 3, comprenant les étapes consistant à :

ajouter du sulfate de zinc et de l'oxime d'acide pyruvique sodique monohydraté en tant que réactifs dans une solution aqueuse ;
mélanger les réactifs pour former un précipité ;
filtrer le précipité et sécher le précipité sous vide pendant une nuit ;
chauffer le précipité pendant une nuit pour obtenir un nano-ZnO ; et
proportionner pour obtenir le rapport approprié et pulvériser le nano-ZnO avec des nanoparticules de ruthénium/charbon activé pour fabriquer un catalyseur composite.

**5.** Procédé de fabrication du catalyseur composite selon la revendication 4, dans lequel le rapport pondéral des nanoparticules de ruthénium/charbon activé et du précipité pour fabriquer le catalyseur composite est au moins un parmi 1/0, 1/1, 1/2 et 3/2.

**6.** Procédé de fabrication du catalyseur composite selon la revendication 4, dans lequel le précipité est composé de zinc(II) 2-oximinoproprionate déshydraté.

**7.** Procédé de fabrication du catalyseur composite selon la revendication 4, comprenant en outre les étapes consistant à : activer le catalyseur composite sous une température spécifique, un débit d'hydrogène spécifique et pendant une durée spécifique.

**8.** Procédé de fabrication du catalyseur composite selon la revendication 7, dans lequel la température spécifique est comprise entre 662 K et 673 K.

**9.** Procédé de fabrication du catalyseur composite selon la revendication 7, dans lequel le débit d'hydrogène spécifique est de 50 à 60 ml/min.

**10.** Procédé de fabrication du catalyseur composite selon la revendication 7, dans lequel la durée spécifique est pendant une nuit.

**11.** Procédé d'utilisation du composite selon les revendications 1 à 3 pour une condensation de l'acétone en phase gazeuse en une étape.

**12.** Procédé d'utilisation du catalyseur composite selon les revendications 1 à 3, comprenant les étapes suivantes :

charger le catalyseur composite dans un réacteur entre deux couches de laine de verre pyrex et des pièces de céramique ;
placer un thermocouple dans le centre du catalyseur composite pour détecter une température de réaction ;
vaporiser l'acétone en utilisant un tube chauffé et une pompe à un débit spécifique et à une température spécifique ;
introduire l'acétone vaporisée sous un flux ininterrompu à un débit spécifique pour le mélanger à un gaz d'hydrogène à un débit continu, et
faire réagir l'acétone vaporisée mélangée à un gaz d'hydrogène avec le catalyseur composite pour produire de la méthyl-isobutyl-cétone et de l'alcool isopropylique.

**13.** Procédé d'utilisation du catalyseur composite selon la revendication 12, comprenant en outre les étapes consistant à :

recueillir un produit liquide qui a été formé et analyser le produit liquide une fois par heure en utilisant un équipement de chromatographie en phase gazeuse ; et
analyser un produit gazeux en utilisant un analyseur afin d'identifier et de quantifier le produit gazeux.

**14.** Procédé d'utilisation du catalyseur composite selon la revendication 13, dans lequel le produit liquide est au moins un parmi la méthyl-isobutyl-cétone, l'oxyde de mésityle de diisobutylcétone, le mésitylène et l'alcool isopropylique.

**15.** Procédé d'utilisation du catalyseur composite selon la revendication 12, dans lequel la température de réaction se situe dans l'intervalle de 523 K à 648 K, le débit de l'acétone est au moins un parmi 0,01, 0,015, 0,02 et 0,025 ml/min, et/ou le débit de l'hydrogène est au moins un parmi 5,0, 10,0, 15,0 et 20,0 ml/min.

Figure 1

EP 2 517 788 B1

Figure 2

Figure 3

Figure 4

Figure 5

Figure 6

Figure 7

Figure 8

EP 2 517 788 B1

EP 2 517 788 B1

Figure 9

Figure 10

Figure 11

Figure 12

Figure 13

Figure 14

Figure 15

Figure 16

Figure 17

EP 2 517 788 B1

Figure 18

Figure 19

Figure 20

EP 2 517 788 B1

Figure 21

EP 2 517 788 B1

EP 2 517 788 B1

Figure 22

**EP 2 517 788 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7951976 B1